(19)

**Europäisches Patentamt**
**European Patent Office**
**Office européen des brevets**

(11) **EP 4 535 452 A1**

(12) **EUROPEAN PATENT APPLICATION**
published in accordance with Art. 153(4) EPC

(43) Date of publication:
**09.04.2025 Bulletin 2025/15**

(21) Application number: **23912651.9**

(22) Date of filing: **07.12.2023**

(51) International Patent Classification (IPC):
$H01M\ 4/134^{(2010.01)}$     $H01M\ 4/62^{(2006.01)}$
$H01M\ 4/38^{(2006.01)}$     $H01M\ 4/48^{(2010.01)}$
$H01M\ 4/587^{(2010.01)}$     $H01M\ 4/36^{(2006.01)}$
$H01M\ 4/133^{(2010.01)}$     $H01M\ 4/131^{(2010.01)}$
$H01M\ 10/052^{(2010.01)}$

(52) Cooperative Patent Classification (CPC):
H01M 4/131; H01M 4/133; H01M 4/134;
H01M 4/36; H01M 4/38; H01M 4/48; H01M 4/587;
H01M 4/62; H01M 10/052; Y02E 60/10

(86) International application number:
**PCT/KR2023/020075**

(87) International publication number:
**WO 2024/143976 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 KR 20220184423**
         **06.12.2023 KR 20230175688**

(71) Applicant: **LG Energy Solution, Ltd.**
**Seoul 07335 (KR)**

(72) Inventors:
• **KO, Minjin**
**Daejeon 34122 (KR)**

• **KWON, Yohan**
**Daejeon 34122 (KR)**
• **KIM, Young Jae**
**Daejeon 34122 (KR)**
• **LEE, Jaewook**
**Daejeon 34122 (KR)**
• **LEE, Jieun**
**Daejeon 34122 (KR)**
• **JUN, Chan Soo**
**Daejeon 34122 (KR)**

(74) Representative: **Hoffmann Eitle**
**Patent- und Rechtsanwälte PartmbB**
**Arabellastraße 30**
**81925 München (DE)**

(54) **ELECTRODE COMPOSITION FOR LITHIUM SECONDARY BATTERY, ELECTRODE SLURRY, ELECTRODE, AND LITHIUM SECONDARY BATTERY**

(57) Disclosed is an electrode composition for a lithium secondary battery, including an electrode active material, a conductive material, and a binder, in which the binder is a copolymer of a (meth)acrylamide monomer, a (meth)acrylic acid monomer, an acrylonitrile monomer, and a metal-substituted (meth)acrylic acid monomer, and satisfies specified equations, an electrode slurry including the same, an electrode, and a lithium secondary battery. Accordingly, it is possible to solve the problem of volume expansion during repeated charging and discharging.

**EP 4 535 452 A1**

**Description**

[Technical Field]

This application claims priority to and the benefit of Korean Patent Application Nos. 10-2022-0184423 and 10-2023-0175688 filed in the Korean Intellectual Property Office on December 26, 2022 and December 6, 2023, respectively, the entire contents of which are incorporated herein by reference.

The present specification relates to an electrode composition for a lithium secondary battery, an electrode slurry, an electrode, and a lithium secondary battery.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

Meanwhile, as technology development of and demand for mobile devices have increased, demands for secondary batteries have been rapidly increased. Accordingly, lithium secondary batteries having characteristics of high energy density and voltage, long cycle life, and low self-discharge rate have been commercialized and widely used. Accordingly, as an electrode for a high capacity lithium secondary battery, studies have been actively conducted in order to prepare an electrode having a high energy density per unit volume.

Generally, a secondary battery is composed of a positive electrode, a negative electrode, an electrolyte, and a separator, and in particular, the negative electrode includes a negative electrode active material, and silicon-containing particles with large charge and discharge capacities may be used as the negative electrode active material.

In particular, recently, in response to the demand for a secondary battery having an electrode with a high energy, studies have been actively conducted on a method for increasing the capacity by together using a silicon-containing compound such as Si/C or SiOx (0 < x < 2), which has a 10-fold higher capacity than a graphite-based material, as a negative electrode active material. However, compared to existing graphite-based materials, silicon-containing compounds have a problem in that due to the generation of hydrogen gas in the repeated charging and discharging process, the volume expands to block the conductive path, thereby causing the battery characteristics to deteriorate.

In order to solve the volume expansion caused by the above-described repeated charging and discharging process, studies have also been conducted on the composition of binders, and as a result, studies have been conducted on binder polymers having strong stress. In particular, attempts have been made to change the composition and content of the binder polymer.

In addition, in order to secure the conductivity of the negative electrode, the secondary battery further includes a conductive material. Although carbon black and the like have been mainly used in the related art, single-walled carbon nanotubes (SWCNTs) with a thin and elongated shape have been used in order to improve the capacity of the secondary battery.

In order to solve the problems, various methods have been discussed, and as one of the methods, a method capable of easily adjusting the physical properties of a binder by changing the type and/or content of the constituent element constituting the binder such that the binder has strong stress.

[Detailed Description of the Invention]

[Technical Problem]

The present inventors have found that by including a (meth)acrylamide monomer as a main constituent element of a binder in a predetermined content range, the glass transition temperature (Tg) value of the binder may be easily adjusted, and accordingly, electrode slurries, electrodes, and lithium secondary batteries including the binder in the future may solve the above problems by securing high strength, excellent binding properties and flexibility, and high electrode density.

Additionally, the present inventors attempted improvement through various aspects such as improving the capacity by including a silicon-containing active material as an electrode active material, further improving the capacity of a secondary battery using single-walled carbon nanotubes as a conductive material, improving the compatibility of the single-walled carbon nanotubes using a water-based binder with high dispersibility as a binder, or preventing the expansion of an electrode according to the repeated charging and discharging process by adjusting the pH of the binder in a predetermined range, thereby completing the present invention.

Accordingly, the present application has been made in an effort to provide an electrode composition for a lithium secondary battery including the above technical features, an electrode slurry, an electrode, and a lithium secondary battery.

[Technical Solution]

An exemplary embodiment of the present specification provides an electrode composition for a lithium secondary battery, the composition including an electrode active material, a conductive material and a binder, wherein the binder is a copolymer of a (meth)acrylamide monomer, a (meth)acrylic acid monomer, a (meth)acrylonitrile monomer and a metal-substituted (meth)acrylic acid monomer, and satisfies the following Equations (I) to (III):

$$1 \leq [AM]/([AA-H] + [AA-M]) \leq 10 \qquad - \text{Equation (I)}$$

$$0.01 \leq [AA-H]([AA-H] + [AA-M]) \leq 0.5 \qquad - \text{Equation (II)}$$

$$2 \leq ([AM] + [AA-H] + [AA-M])/[AN] \leq 10000 \qquad - \text{Equation (III)}.$$

In Equations (I) to (III), based on 100 parts by weight of the binder:

[AM] indicates parts by weight of the (meth)acrylamide monomer,
[AA-H] indicates parts by weight of the (meth)acrylic acid monomer,
[AA-M] indicates parts by weight of the metal (M)-substituted (meth)acrylic acid monomer, and
[AN] indicates parts by weight of the (meth)acrylonitrile monomer.

A content of the (meth)acrylamide monomer may be 40 parts by weight or more and 80 parts by weight or less based on 100 parts by weight of the binder.

The binder may have a glass transition temperature (Tg) of 125°C or more and 150°C or less.

The electrode active material may be present in an amount of 60 parts by weight or more based on 100 parts by weight of the electrode composition.

The electrode active material may comprise one or more selected from the group consisting of a silicon-containing active material and a carbon-containing active material.

The silicon-containing active material may comprise one or more selected from the group consisting of SiOx, wherein x=0, SiOx, wherein 0<x<2, SiC, and a Si alloy.

The carbon-containing active material may comprise one or more selected from the group consisting of artificial graphite, natural graphite, hard carbon, and soft carbon.

The conductive material may comprise one or more selected from the group consisting of a dotted conductive material, a planar conductive material, and a linear conductive material.

The binder may comprise a water-based binder.

A pH of the binder may be 4.5 or more and 7.5 or less.

Further, an exemplary embodiment of the present specification provides an electrode slurry for a lithium secondary battery, the electrode slurry including the electrode composition for a lithium secondary battery and a solvent.

In addition, an exemplary embodiment of the present specification provides an electrode for a lithium secondary battery, the electrode including an electrode current collector layer, and an electrode active material layer including the electrode slurry on one surface or both surfaces of the electrode current collector layer.

Finally, an exemplary embodiment of the present specification provides a lithium secondary battery including a first electrode, a second electrode, a second electrode, a separator between the first electrode and the second electrode, and an electrolyte, wherein the first electrode or the second electrode is the electrode for a lithium secondary battery.

[Advantageous Effects]

The electrode composition for a lithium secondary battery according to the present application includes an electrode active material with a large charging and discharging capacity, but provides the effects of preventing a volume expansion problem due to the repeated charging and discharging, having excellent phase stability, and further improving the service life of the battery.

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail such that a person skilled in the art to which the present invention pertains can easily carry out the present invention. However, the present invention can be implemented in various different forms, and is not limited to the following description.

**<Electrode composition for lithium secondary battery>**

An exemplary embodiment of the present specification provides an electrode composition for a lithium secondary battery, including: an electrode active material; a conductive material; and a binder, in which the binder is a copolymer of a (meth)acrylamide monomer, a (meth)acrylic acid monomer, a (meth)acrylonitrile monomer and a metal-substituted (meth)acrylic acid monomer, and satisfies the following Equations (I) to (III).

$$1 \leq [AM]/([AA\text{-}H] + [AA\text{-}M]) \leq 10 \qquad - \text{Equation (I)}$$

$$0.01 \leq [AA\text{-}H]([AA\text{-}H] + [AA\text{-}M]) \leq 0.5 \qquad - \text{Equation (II)}$$

$$2 \leq ([AM] + [AA\text{-}H] + [AA\text{-}M])/[AN] \leq 10000 \qquad - \text{Equation (III)}$$

In Equations (I) to (III),

based on 100 parts by weight of the binder,
[AM] indicates parts by weight of the (meth)acrylamide monomer,
[AA-H] indicates parts by weight of the (meth)acrylic acid monomer,
[AA-M] indicates parts by weight of the metal (M)-substituted (meth)acrylic acid monomer, and
[AN] indicates parts by weight of the (meth)acrylonitrile monomer.

According to the exemplary embodiment, when the binder complies with Equations (I) to (III), shrinkage and expansion due to charging/discharging of the battery may be suppressed, and the life service performance may be improved.

According to an exemplary embodiment of the present invention, the metal (M) may be Li, Na, Ca, or a combination thereof.

In an exemplary embodiment of the present specification, based on 100 parts by weight of the binder, the content of the (meth)acrylamide monomer may be 40 parts by weight or more and 80 parts by weight or less.

In the electrode composition for a lithium secondary battery according to the exemplary embodiment, as the content of the (meth)acrylamide is included in the above range, shrinkage and expansion due to charging/discharging of the battery may be further suppressed, and the service life performance may be further improved.

In an exemplary embodiment of the present specification, the binder may have a glass transition temperature (Tg) of 125°C or more and 150°C or less.

In the electrode composition for a lithium secondary battery according to the exemplary embodiment, as the Tg is controlled in the above range, shrinkage and expansion due to charging/discharging of the battery may be further suppressed, and the service life performance may be further improved.

In the present specification, the term "(meth)acrylic" may include methacrylic or acrylic.

In the present specification, based on 100 parts by weight of the binder, the content of the (meth)acrylamide may be about 40 parts by weight or more, about 45 parts by weight or more, or about 50 parts by weight or more, or about 80 parts by weight or less, about 75 parts by weight or less, or about 70 parts by weight or less.

In the present specification, a polymerization initiator is used to prepare the copolymer, and ammonium persulfate may be used as an example of the polymerization initiator, but the polymerization initiator is not limited thereto.

In the present specification, the fact that the binder includes a plurality of compounds having a specific ratio (represented by parts by weight or weight ratio) may mean that each compound (for example: (meth)acrylamide, (meth)acrylic acid, (meth)acrylonitrile, and metal-substituted (meth)acrylic acid) is included as a monomer for the binder polymer.

In an exemplary embodiment of the present specification, the electrode active material may be present in an amount of 60 parts by weight or more based on 100 parts by weight of the electrode composition for a lithium secondary battery.

In an exemplary embodiment of the present specification, the electrode active material may be included in an amount of about 60 parts by weight or more, preferably about 65 parts by weight or more, more preferably about 70 parts by weight or more, or about 95 parts by weight or less, preferably about 90 parts by weight or less, based on 100 parts by weight of the electrode composition for a lithium secondary battery.

In an exemplary embodiment of the present specification, the electrode active material may include one or more selected from the group consisting of a silicon-containing active material and a carbon-containing active material.

In the present specification, the silicon-containing active material has a 10-fold higher capacity than the carbon-containing active material, and accordingly, when the silicon-containing active material is applied to an electrode, particularly a negative electrode, it is possible to implement an electrode with a higher level of energy density even with a thinner thickness than when the carbon-containing active material is included alone.

In another exemplary embodiment of the present specification, when the electrode active material is composed of a silicon-containing active material and a carbon-containing active material, the composition ratio between the silicon-containing active material and the carbon-containing active material may be in a range of 2 : 98 to 30 : 70.

The electrode active material according to the exemplary embodiment includes a carbon-containing active material as a main component, and thus may further provide an effect in which the volume of the electrode slightly expands due to the charging and discharging and the conductive connectivity in the electrode is excellent.

In an exemplary embodiment of the present specification, the silicon-containing active material may include one or more of $SiO_x$ (x=0), $SiO_x$ (0<x<2), SiC, and a Si alloy.

In the present specification, the electrode active material includes silicon particles, which may be present, for example, in a crystalline or amorphous form. Specifically, the silicon particles may be preferably spherical particles, but are not limited thereto.

In an exemplary embodiment of the present specification, the electrode composition for a lithium secondary battery is a negative electrode composition, and accordingly, the silicon-containing active material; the conductive material; and the binder may all be for the negative electrode composition.

The negative electrode composition has a feature in which by using a specific conductive material and a specific binder, which can suppress the volume expansion rate in the charging/discharging process even though a silicon-containing active material having a remarkably high capacity is used in the above range, the performance of the negative electrode does not deteriorate and output characteristics at charging and discharging are excellent even though the above range is included.

In the present specification, the case of $SiO_2$ where x is 2 in the $SiO_x$ is not included, but this $SiO_2$ does not react with lithium ions, and thus cannot store lithium. Therefore, it is preferred that x falls within the range of the exemplary embodiment.

In the present specification, the silicon-containing active material may be Si/C composed of a composite of Si and C, or Si.

In the present specification, two or more of the silicon-containing active materials may be used in mixture.

In the present specification, in some cases, a carbon-containing active material may be further included in addition to the above-described silicon-containing active material.

In general, it is known that silicon-containing active materials have a capacity 10-fold or higher than that of carbon-containing active material, and accordingly, when a silicon-containing active material is applied to an electrode, particularly, a negative electrode, it is expected that it is possible to implement an electrode having a high level of energy density even with a small thickness.

In an exemplary embodiment of the present specification, the SiOx (x=0) may be included in an amount of 70 parts by weight or more based on 100 parts by weight of the silicon-containing active material.

In another exemplary embodiment of the present specification, the silicon-containing active material may include the SiOx (x=0) in an amount of 70 parts by weight or more, preferably 80 parts by weight or more, and more preferably 90 parts by weight or more, or 100 parts by weight or less, preferably 99 parts by weight or less, and more preferably 95 parts by weight or less, based on or 100 parts by weight of the silicon-containing active material.

In another exemplary embodiment, the silicon-containing active material may have an average particle diameter (D50) of 3 $\mu$m to 10 $\mu$m.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the particle size distribution may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present invention, the carbon-containing active material may include one or more selected from the group consisting of artificial graphite, natural graphite, hard carbon, and soft carbon.

In the related art, it was common to use only a graphite-based compound as a negative electrode active material, but recently, as the demand for a high-capacity battery has increased, attempts to use a silicon-containing active material or use a silicon-containing active material by being mixed with the carbon-containing active material have been increased in order to increase the capacity.

In another exemplary embodiment, the conductive material may be included in an amount of 0.3 parts by weight or more and 40 parts by weight or less based on 100 parts by weight of the electrode composition for a lithium secondary battery.

In still another exemplary embodiment, the conductive material may be included in an amount of 10 parts by weight or more and 40 parts by weight or less, preferably 10 parts by weight or more and 30 parts by weight or less, and more preferably 10 parts by weight or more and 25 parts by weight or less, based on 100 parts by weight of the electrode composition.

In yet another exemplary embodiment, the conductive material may include one or more selected from the group consisting of a dotted conductive material, a planar conductive material, and a linear conductive material.

In still yet another exemplary embodiment, the conductive material may be a mixture of a dotted conductive material and a linear conductive material.

In the present specification, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In the present specification, the planar conductive material may increase the surface contact between silicon particles in the negative electrode to improve conductivity and simultaneously suppress the disconnection of the conductive path due to the volume expansion. The planar conductive material may be expressed as a plate-like conductive material or a bulk conductive material. Examples of the planar conductive material may include at least one selected from the group consisting of plate-like graphite, graphene, graphene oxide, and graphite flake, and may be preferably plate-like graphite.

In the present specification, the linear conductive material may be carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has a $sp^2$ bond structure.

In this case, the carbon nanotube unit may exhibit characteristics of a conductor or semiconductor depending on a structure and an angle at which the graphite sheet is roll-pressed. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In another exemplary embodiment, the conductive material may be a negative electrode conductive material.

In the present specification, the negative electrode conductive material is applied to the negative electrode, and has a completely different configuration from a positive electrode conductive material applied to the positive electrode. That is, the negative electrode conductive material serves to capture a contact point between silicon-containing active materials in which the volume expansion of the electrode is very large due to charging and discharging, whereas the positive electrode conductive material serves to impart partial conductivity while playing a buffer role as a cushioning role when roll-pressed, so that the negative electrode conductive material and the positive electrode conductive material have different structures and roles.

In an exemplary embodiment of the present invention, the binder may be included in an amount of 3 parts by weight or more and 30 parts by weight or less based on 100 parts by weight of the electrode composition for a lithium secondary battery.

In another exemplary embodiment of the present specification, the binder may be included in an amount of 30 parts by weight or less, preferably 25 or less, and more preferably 20 parts by weight or less, or may be included in an amount of 3 parts by weight or more, preferably 5 parts by weight or more, based on 100 parts by weight of the electrode composition for a lithium secondary battery.

In still another exemplary embodiment, the binder may be a negative electrode binder.

According to the exemplary embodiment, compared to the existing carbon-containing negative electrode, when a Si-based compound is used for the negative electrode, the negative electrode has excellent bonding strength with the conductive material and the binder.

In an exemplary embodiment of the present invention, the binder may be a water-based binder.

In an exemplary embodiment of the present invention, the binder may be a copolymer further including one or more selected from the group consisting of a (meth)acrylic acid monomer, a (meth)acrylonitrile monomer, and a metal-substituted (meth)acrylic acid monomer.

According to an exemplary embodiment of the present invention, the pH of the binder may be 4.5 or more and 7.5 or less. For example, the pH of the binder may be 4.5 or more, 4.6 or more, or 4.7 or more, or 7.5 or less, 7.4 or less, or 7.3 or less.

In the present specification, the hydrogen ion concentration (pH) is measured using a seven compact pH meter manufactured by Mettler-Toledo Co., Ltd.

In another exemplary embodiment, the binder has a weight average molecular weight of 100,000 g/mol or more and 1,500,000 g/mol or less.

**<Electrode slurry for lithium secondary battery>**

In an exemplary embodiment of the present invention, an electrode slurry including the electrode composition for a lithium secondary battery and a solvent is provided.

In another exemplary embodiment of the present invention, the solvent includes those known in the art. For example, the solvent may be distilled water or NMP.

The electrode slurry of the present invention is a negative electrode slurry, and accordingly, the electrode composition may relate to a negative electrode slurry.

In some cases, when the viscosity of the electrode slurry is controlled within a suitable range by appropriately adjusting the specific surface area of the particles in addition to appropriately adjusting the average particle diameter (D50) of the silicon-containing active material, the dispersion of constituent components (for example: a conductive material, a binder, a silicon-containing active material, and the like) in the slurry may be improved. Accordingly, the contact area between the constituent components is improved, so that the conductive network may be maintained, the capacity retention rate may be increased, and the current density non-uniformity phenomenon during charging/discharging may also be prevented.

Further, in some cases, the viscosity of the electrode slurry may be adjusted so as to be 5000 cps to 6000 cps.

Accordingly, when one surface or both surfaces of an electrode current collector layer is coated with the electrode slurry in the future, coatability and storability are excellent.

## <Electrode for lithium secondary battery>

Another exemplary embodiment of the present invention provides an electrode for a lithium secondary battery, including: an electrode current collector layer; and an electrode active material layer in which the electrode slurry is applied on one surface or both surfaces of the electrode current collector layer.

In another exemplary embodiment of the present invention, the electrode is a negative electrode, and accordingly, the electrode current collector layer, the electrode slurry, and the electrode active material layer all relate to the negative electrode.

In the present specification, the negative electrode current collector layer generally has a thickness of 1 $\mu$m to 100 $\mu$m. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 $\mu$m or more and 100 $\mu$m or less, and the negative electrode active material layer has a thickness of 20 $\mu$m or more and 500 $\mu$m or less.

However, the thickness may be variously modified depending on the type and use of the negative electrode used, and is not limited thereto.

## <Lithium Secondary Battery>

An exemplary embodiment of the present invention provides a lithium secondary battery including: a first electrode; a second electrode; a separator provided between the first electrode and the second electrode; and an electrolyte, in which any one of the first electrode and the second electrode is the electrode for a lithium secondary battery.

The lithium secondary battery according to the exemplary embodiments may include, particularly, the above-described electrode for a lithium secondary battery.

Specifically, the first electrode may be a negative electrode and the second electrode may be a positive electrode, or the first electrode may be a positive electrode and the second electrode may be a negative electrode.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 $\mu$m to 500 $\mu$m, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn);

$LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-containing material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone (NMP), propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^7$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

**<Method for manufacturing lithium secondary battery>**

In another exemplary embodiment of the present invention, as a method for manufacturing a lithium secondary battery, the method including: preparing an electrode slurry for a lithium secondary battery by mixing a composition for a lithium secondary battery with a solvent; applying the electrode slurry for a lithium secondary battery on one surface or both surfaces of an electrode current collector layer; and drying the electrode current collector layer to which the electrode slurry for a lithium secondary battery is applied, the composition for a lithium secondary battery, the solvent, the electrode current collector layer, and the application are as described above.

In the present specification, as the drying, a method known in the art, such as air drying, is used.

In the present specification, steps such as rolling applied after the above steps are as known in the art.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**Preparation Examples. Preparation of binder**

**<Preparation Examples 1 to 3 and Comparative Preparation Examples 1 to 3>**

In a reactor equipped with a stirrer, a thermometer, a reflux condenser, and a nitrogen gas inlet tube, in the following content (based on weight ratio) as described in the following Table 1, each monomer (that is, (meth)acrylamide (AM, using a 50% aqueous solution), (meth)acrylic acid (AA-H, using a 80% aqueous solution), (meth)acrylonitrile (AN) and metal (M)-substituted (meth)acrylic acid (AA-M) were mixed, ammonium persulfate was added thereto as a polymerization initiator, and then the resulting mixture was reacted at 75°C for 8 hours, thereby preparing an aqueous polymer solution.

Thereafter, a 0.1 molar NaOH aqueous solution was used and dropped into the aqueous polymer solution to prepare an aqueous binder having a desired pH (see Table 2).

[Table 1]

| Classification | AM Content | AA-H Content | AN Content | AA-M Content | Equation (I) | Equation (II) | Equation (III) |
|---|---|---|---|---|---|---|---|
| Preparation Example 1 | 50 | 4 | 20 | 26 | 1.67 | 0.13 | 4 |
| Preparation Example 2 | 60 | 5 | 15 | 20 | 2 | 0.2 | 5.67 |
| Preparation Example 3 | 70 | 5 | 5 | 20 | 2.8 | 0.2 | 19 |
| Comparative Preparation Example 1 | 30 | 15 | 50 | 5 | 1.5 | 0.75 | 1 |
| Comparative Preparation Example 2 | 30 | 40 | 20 | 10 | 0.5 | 0.8 | 4 |
| Comparative Preparation Example 3 | 85 | 1 | 10 | 4 | 17 | 0.2 | 4.5 |

provided that

```
Equation (I): [AM]/([AA-H] + [AA-M])
```

$$\text{Equation (II): } [AA\text{-}H]([AA\text{-}H] + [AA\text{-}M])$$

$$\text{Equation (III): } ([AM] + [AA\text{-}H] + [AA\text{-}M])/[AN]$$

in Equations (I) to (III), based on 100 parts by weight of the binder, [AM] means parts by weight of the (meth)acrylamide monomer, [AA-H] means parts by weight of the (meth)acrylic acid monomer, [AA-M] means parts by weight of the metal (M)-substituted (meth)acrylic acid monomer, and [AN] means parts by weight of the (meth)acrylonitrile monomer.

**Examples. Preparation of electrode slurry**

**Example 1.**

Si with D50 = 5.2 $\mu$m was used as a negative electrode active material, three types of conductive materials: carbon black (Super C65 manufactured by TIMCAL Ltd.), artificial graphite (SFG6L manufactured by TIMCAL Ltd.), and SWCNT were used as conductive materials, the water-based binder of Preparation Example 1 was mixed with the other components so as to have the negative electrode active material : carbon black : artificial graphite : SWCNT : the water-based binder = 82 : 3 : 6.3 : 0.7 : 12 (based on weight ratio), thereby preparing an electrode composition.
An electrode slurry was prepared by adding water as a solvent, and here, the content of water was adjusted in consideration of coatability, viscosity, and solid content. The viscosity of the obtained electrode slurry was adjusted to 5000 cps to 6000 cps.

**Examples 2 and 3.**

Electrode slurries were prepared in the same manner as in Example 1, except that the water-based binders of Preparation Examples 2 and 3 were each used.

**Example 4.**

An electrode slurry was prepared in the same manner as in Example 1, except that artificial graphite (QCG-N2, manufactured by Shanshan) : SiO (E82, manufactured by DAEJOO ELECTRONIC MATERIALS Co., Ltd.) were used at a ratio of 9 : 1 as the negative electrode active material.

**Example 5.**

An electrode slurry was prepared in the same manner as in Example 1, except that artificial graphite : SiC (SD5100A, manufactured by Sila Nanotechnologies Inc.) were used at a ratio of 9 : 1 as the negative electrode active material.

**Comparative Examples 1 to 3.**

Electrode slurries were prepared in the same manner as in Example 1, except that the water-based binders of Comparative Preparation Examples 1 to 3 were each used.

**Comparative Example 4.**

An electrode slurry was prepared in the same manner as in Comparative Example 1, except that artificial graphite : SiO were used at a ratio of 9 : 1 as the negative electrode active material.

**Comparative Example 5.**

An electrode slurry was prepared in the same manner as in Comparative Example 1, except that artificial graphite : SiC were used at a ratio of 9 : 1 as the negative electrode active material.

**Experimental Examples.**

**Experimental Example 1. Measurement of glass transition temperature (Tg) of binder**

The glass transition temperature (Tg) of the binder obtained in each of the Preparation Examples 1 to 3 and Comparative Preparation Examples 1 to 3 was measured using a DSC measurement method by increasing the temperature from -50°C to 180°C at 5°C intervals. The results are shown in the following Table 2.

**Experimental Example 2. Measurement of pH of binder**

By using a seven compact pH meter manufactured by Mettler-Toledo Co., Ltd., the pH of the binder obtained in each of the Preparation Examples 1 to 3 and Comparative Preparation Examples 1 to 3 was measured. The results are shown in the following Table 2.

[Table 2]

| Classification | Tg (°C) | pH |
|---|---|---|
| Preparation Example 1 | 133 | 6.8 |
| Preparation Example 2 | 138 | 6.4 |
| Preparation Example 3 | 146 | 6.5 |
| Comparative Preparation Example 1 | 114 | 4.6 |
| Comparative Preparation Example 2 | 118 | 4.2 |
| Comparative Preparation Example 3 | 152 | 6.4 |

According to Table 2 above, in Preparation Examples 1 to 3 in which the content of the (meth)acrylamide monomer was 40 parts by weight or more and 80 parts by weight or less based on 100 parts by weight of the binder, the glass transition temperature of the binder fell within a range of 125°C or more and 150°C or less, but in Comparative Preparation Examples 1 to 3 in which the content of the (meth)acrylamide monomer was less than 40 parts by weight or more than 80 parts by weight, the glass transition temperature was less than 120°C or more than 150°C.

**Experimental Example 3. Battery manufacturing and battery characteristic evaluation**

A copper foil with a thickness of 15 μm was coated with each of the electrode slurries of Examples 1 to 5 and Comparative Examples 1 to 5 and dried, an electrode active material layer with a thickness of 48 μm was formed on one surface of the copper foil, and the copper foil was punched into circular shapes with a diameter of 14 Φ (mm) to manufacture a test electrode (negative electrode). A metal lithium foil with a thickness of 0.3 mm was used as a positive electrode, a porous polyethylene sheet with a thickness of 0.1 mm was used as the separator, and a product obtained by dissolving $LiPF_6$ as a lithium salt at a concentration of about 1 mol/L in a mixed solvent of ethylene carbonate (EC) and diethyl carbonate (DEC) at a volume ratio of 1:1 was used as an electrolytic solution.

A coin cell for evaluation with a thickness of 2 mm and a diameter of 32 mm was manufactured by sealing the negative electrode, the positive electrode, the separator, and the electrolytic solution in a stainless steel container. The coin cell was charged with a constant current of 0.05 C until the voltage reached 0.01 V, and discharged with a constant current of 0.05 C until the voltage reached 1.5 V to determine the discharge capacity and initial efficiency, and thereafter, a capacity retention rate test was conducted by performing the cycle characteristics in the same voltage range as above at a constant current of 0.2 C, and the results are shown in the following Table 3.

[Table 3]

| Classification | Type of negative electrode active material | Type of water-based binder | Capacity retention rate (%) Based on 30 cycles Calculation |
|---|---|---|---|
| Example 1 | Si | Preparation Example 1 | 79 |
| Example 2 | Si | Preparation Example 2 | 85 |
| Example 3 | Si | Preparation Example 3 | 86 |

(continued)

| Classification | Type of negative electrode active material | Type of water-based binder | Capacity retention rate (%) Based on 30 cycles Calculation |
|---|---|---|---|
| Example 4 | Graphite : SiO (9:1) | Preparation Example 1 | 82 |
| Example 5 | Graphite : SiC (9:1) | Preparation Example 1 | 86 |
| Comparative Example 1 | Si | Comparative Preparation Example 1 | 38 |
| Comparative Example 2 | Si | Comparative Preparation Example 2 | 45 |
| Comparative Example 3 | Si | Comparative Preparation Example 3 | 52 |
| Comparative Example 4 | Graphite : SiO (9:1) | Comparative Preparation Example 1 | 69 |
| Comparative Example 5 | Graphite : SiC (9:1) | Comparative Preparation Example 1 | 62 |

As shown in Table 3 above, in the electrode slurries of Examples 1 to 5, binders (glass transition temperature of 125°C or more and 150°C or less, respectively) with a (meth)acrylamide monomer content of 40 parts by weight or more and 80 parts by weight or less based on 100 parts by weight of the binder were used, and the capacity retention rates of the batteries manufactured therefrom were 79% or more. In contrast, in the electrode slurries of Comparative Examples 1 to 5, binders (the glass transition temperature of each binder does not satisfy a range of 125°C or more and 150°C or less) with a (meth)acrylamide monomer content of less than 40 parts by weight or more than 80 parts by weight based on 100 parts by weight of the binder were used, and the capacity retention rates of the batteries manufactured therefrom were less than 70%.

## Claims

1. An electrode composition for a lithium secondary battery, the composition comprising:

an electrode active material;
a conductive material; and
a binder,
wherein the binder comprises a copolymer of a (meth)acrylamide monomer, a (meth)acrylic acid monomer, a (meth)acrylonitrile monomer, and a metal-substituted (meth)acrylic acid monomer, and satisfies the following Equations (I) to (III):

$$1 \leq [AM]/([AA\text{-}H] + [AA\text{-}M]) \leq 10 \qquad - \text{Equation (I)}$$

$$0.01 \leq [AA\text{-}H]([AA\text{-}H] + [AA\text{-}M]) \leq 0.5 \qquad - \text{Equation (II)}$$

$$2 \leq ([AM] + [AA\text{-}H] + [AA\text{-}M])/[AN] \leq 10000 \qquad - \text{Equation (III)}$$

in Equations (I) to (III), based on 100 parts by weight of the binder:

[AM] indicates parts by weight of the (meth)acrylamide monomer,
[AA-H] indicates parts by weight of the (meth)acrylic acid monomer,
[AA-M] indicates parts by weight of the metal (M)-substituted (meth)acrylic acid monomer, and
[AN] indicates parts by weight of the (meth)acrylonitrile monomer.

2. The electrode composition of claim 1, wherein a content of the (meth)acrylamide monomer is 40 parts by weight or more and 80 parts by weight or less based on 100 parts by weight of the binder.

3. The electrode composition of claim 1, wherein the binder has a glass transition temperature (Tg) of 125°C or more and 150°C or less.

4. The electrode composition of claim 1, wherein the electrode active material is present in an amount of 60 parts by weight or more based on 100 parts by weight of the electrode composition.

5. The electrode composition of claim 1, wherein the electrode active material comprises one or more selected from the group consisting of a silicon-containing active material and a carbon-containing active material.

6. The electrode composition of claim 5, wherein the silicon-containing active material comprises one or more selected from the group consisting of SiOx, wherein x=0, SiOx, wherein 0<x<2, SiC, and a Si alloy.

7. The electrode composition of claim 5, wherein the carbon-containing active material comprises one or more selected from the group consisting of artificial graphite, natural graphite, hard carbon, and soft carbon.

8. The electrode composition of claim 1, wherein the conductive material comprises one or more selected from the group consisting of a dotted conductive material, a planar conductive material, and a linear conductive material.

9. The electrode composition of claim 1, wherein the binder comprises a water-based binder.

10. The electrode composition of claim 1, wherein a pH of the binder is 4.5 or more and 7.5 or less.

11. An electrode slurry for a lithium secondary battery, the electrode slurry comprising the electrode composition according to claim 1 and a solvent.

12. An electrode for a lithium secondary battery, the electrode comprising:

an electrode current collector layer; and
an electrode active material layer comprising the electrode slurry according to claim 11 on one surface or both surfaces of the electrode current collector layer.

13. A lithium secondary battery comprising:

a first electrode;
a second electrode;
a separator between the first electrode and the second electrode; and
an electrolyte,
wherein the first electrode or the second electrode is the electrode for a lithium secondary battery according to claim 12.

## INTERNATIONAL SEARCH REPORT

| International application No. |
|---|
| **PCT/KR2023/020075** |

### A. CLASSIFICATION OF SUBJECT MATTER

**H01M 4/134**(2010.01)i; **H01M 4/62**(2006.01)i; **H01M 4/38**(2006.01)i; **H01M 4/48**(2010.01)i; **H01M 4/587**(2010.01)i; **H01M 4/36**(2006.01)i; **H01M 4/133**(2010.01)i; **H01M 4/131**(2010.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/134(2010.01); C08F 220/06(2006.01); H01M 10/052(2010.01); H01M 10/0525(2010.01); H01M 4/13(2010.01); H01M 4/131(2010.01); H01M 4/62(2006.01); H01M 4/64(2006.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 (electrode), 바인더 (binder), (메트)아크릴아마이드 ((meth)acrylamide), (메트)아크릴산 ((meth)acrylic acid), (메트)아크릴로니트릴 ((meth)acrylonitrile), 금속 치환 (메트)아크릴산 (metal substituted (meth)acrylic acid), 공중합체 (co-polymer)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0034966 A (LG CHEM, LTD.) 31 March 2021 (2021-03-31)<br>See abstract; paragraphs [0004], [0030], [0062], [0077]-[0078], [0099] and [0141]; and claims 1 and 3. | 1-13 |
| A | CN 113597687 A (DONGGUAN AMPEREX TECHNOLOGY LTD.) 02 November 2021 (2021-11-02)<br>See entire document. | 1-13 |
| A | KR 10-2019-0039993 A (SICHUAN INDIGO TECHNOLOGY CO., LTD.) 16 April 2019 (2019-04-16)<br>See entire document. | 1-13 |
| A | KR 10-2018-0071942 A (SAMSUNG SDI CO., LTD.) 28 June 2018 (2018-06-28)<br>See entire document. | 1-13 |
| A | JP 2004-281055 A (HITACHI CHEM CO., LTD.) 07 October 2004 (2004-10-07)<br>See entire document. | 1-13 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**08 April 2024** | Date of mailing of the international search report<br><br>**09 April 2024** |
| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/020075**

| Patent document cited in search report | | | Publication date (day/month/year) | Patent family member(s) | | | Publication date (day/month/year) |
|---|---|---|---|---|---|---|---|
| KR | 10-2021-0034966 | A | 31 March 2021 | CN | 113994509 | A | 28 January 2022 |
| | | | | EP | 3996173 | A1 | 11 May 2022 |
| | | | | EP | 3996173 | B1 | 23 August 2023 |
| | | | | JP | 2022-528479 | A | 10 June 2022 |
| | | | | JP | 7274604 | B2 | 16 May 2023 |
| | | | | PL | 3996173 | T3 | 04 December 2023 |
| | | | | US | 2022-0216479 | A1 | 07 July 2022 |
| | | | | WO | 2021-060737 | A1 | 01 April 2021 |
| CN | 113597687 | A | 02 November 2021 | CN | 116722100 | A | 08 September 2023 |
| | | | | EP | 4207342 | A1 | 05 July 2023 |
| | | | | JP | 2023-545281 | A | 27 October 2023 |
| | | | | KR | 10-2023-0093521 | A | 27 June 2023 |
| | | | | US | 2023-0231145 | A1 | 20 July 2023 |
| | | | | WO | 2022-110042 | A1 | 02 June 2022 |
| KR | 10-2019-0039993 | A | 16 April 2019 | CN | 106220779 | A | 14 December 2016 |
| | | | | CN | 106220779 | B | 31 August 2018 |
| | | | | EP | 3502151 | A1 | 26 June 2019 |
| | | | | EP | 3502151 | B1 | 02 February 2022 |
| | | | | HU | E059384 | T2 | 28 November 2022 |
| | | | | JP | 2019-526693 | A | 19 September 2019 |
| | | | | JP | 6758505 | B2 | 23 September 2020 |
| | | | | KR | 10-2235389 | B1 | 02 April 2021 |
| | | | | TW | 201809040 | A | 16 March 2018 |
| | | | | TW | I608023 | B | 11 December 2017 |
| | | | | US | 11603423 | B2 | 14 March 2023 |
| | | | | US | 2021-0189037 | A1 | 24 June 2021 |
| | | | | WO | 2018-032665 | A1 | 22 February 2018 |
| KR | 10-2018-0071942 | A | 28 June 2018 | CN | 110088951 | A | 02 August 2019 |
| | | | | CN | 110088951 | B | 16 August 2022 |
| | | | | JP | 2018-101519 | A | 28 June 2018 |
| | | | | JP | 6813350 | B2 | 13 January 2021 |
| | | | | KR | 10-2224023 | B1 | 05 March 2021 |
| | | | | US | 11005102 | B2 | 11 May 2021 |
| | | | | US | 2019-0305315 | A1 | 03 October 2019 |
| | | | | WO | 2018-117519 | A1 | 28 June 2018 |
| JP | 2004-281055 | A | 07 October 2004 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220184423

- US 1020230175688 A